Europäisches Patentamt

European Patent Office

Office européen des brevets

(19)

(11) **EP 1 440 985 A1**

(12) **DEMANDE DE BREVET EUROPEEN**

(43) Date de publication:
**28.07.2004 Bulletin 2004/31**

(51) Int Cl.⁷: **C08F 2/38**, C08F 14/18

(21) Numéro de dépôt: **04290158.7**

(22) Date de dépôt: **22.01.2004**

| | |
|---|---|
| (84) Etats contractants désignés:<br>**AT BE BG CH CY CZ DE DK EE ES FI FR GB GR<br>HU IE IT LI LU MC NL PT RO SE SI SK TR**<br>Etats d'extension désignés:<br>**AL LT LV MK** | (72) Inventeur: **Kappler, Patrick**<br>**69130 Ecully (FR)** |
| (30) Priorité: **23.01.2003 FR 0300716** | (74) Mandataire: **Neel, Henry et al**<br>**Atofina,**<br>**DRDC/DPI,**<br>**4-8, Cours Michelet,**<br>**La Défense 10**<br>**92091 Paris La Défense Cedex (FR)** |
| (71) Demandeur: **Atofina**<br>**92800 Puteaux (FR)** | |

(54) **Procédé de fabrication de PVDF**

(57)    La présente invention concerne un procédé de fabrication de PVDF homopolymère ou copolymère par polymérisation radicalaire du fluorure de vinylidène (VDF), et éventuellement d'un comonomère, en dispersion aqueuse en présence :

- de HFA161 ($CH_3$-$CH_2F$) comme agent de transfert,
- d'un initiateur radicalaire,
- éventuellement d'un additif dispersant.

EP 1 440 985 A1

## Description

### [Domaine de l'invention]

Les polymères à base de fluorure de vinylidène CF$_2$=CH$_2$ (VDF) tels que par exemple le PVDF (polyfluorure de vinylidène) sont connus pour offrir d'excellentes propriétés de stabilité mécanique, une très grande inertie chimique, ainsi qu'une bonne résistance au vieillissement. Ces qualités sont exploitées pour des domaines d'application variés. On citera par exemple, la fabrication de pièces extrudées ou injectées pour l'industrie du génie chimique ou la microélectronique, l'utilisation sous forme de gaine d'étanchéité pour le transport des gaz ou des hydrocarbures, l'obtention de films ou de revêtements permettant la protection dans le domaine architectural, et la réalisation d'éléments protecteurs pour des usages électrotechniques.

La présente invention concerne un procédé de fabrication de PVDF homopolymère ou copolymère. Plus précisément un procédé par polymérisation radicalaire du fluorure de vinylidène (VDF), et éventuellement d'un comonomère, en dispersion aqueuse en utilisant le HFA161 (CH$_3$-CH$_2$F) comme agent de transfert.

### [L'art antérieur et le problème technique]

La demande de brevet **FR 2259114** décrit un procédé pour préparer un PVDF thermiquement stable en émulsion aqueuse. Le milieu réactionnel comprend un émulsifiant fluoré (un sel d'acide carboxylique perfluoré), le peroxydicarbonate comme initiateur (aussi appelé amorceur) et l'acétone comme agent de transfert.

Le brevet **US 4360652** décrit un procédé de polymérisation en émulsion du VDF dans lequel l'agent de transfert est l'alcool isopropylique.

La demande de brevet **FR 2644466** décrit un procédé de polymérisation en émulsion du VDF dans lequel l'utilisation d'un émulsifiant n'est pas requis et dans lequel l'agent de transfert est un acétate d'alkyle.

Le brevet **EP 169328** décrit la polymérisation du VDF en présence d'un surfactant, d'un initiateur et de trichlorofluorométhane ou d'alcool isopropylique, ces deux derniers étant des agents de transfert. Le jaunissement du PVDF, au cours de sa transformation à l'état fondu, est fortement réduit. L'initiateur est toujours ajouté après une partie ou la totalité des agents de transfert.

Dans la demande de brevet **EP 0 655 468 A1** on a décrit le trifluoro-dichloroethane (HCFC 123 ou 1,1,1-trifluoro 2,2-dichloroéthane) comme agent de transfert pour la polymérisation en émulsion du VDF, avec pour objectif d'améliorer les caractéristiques du polymère en terme de variation de coloration à hautes températures. L'agent de transfert de chaîne est introduit en partie au début de la polymérisation et ensuite par incréments au fur et à mesure de la formation du PVDF.

La demande de brevet **FR 2542319** décrit un procédé de préparation du PVDF en suspension utilisant comme agent de transfert des carbonates de dialkyle.

Les agents de transfert décrits dans la demande **EP 0 655 468 A1** et dans le brevet **EP 169328** présentent des inconvénients liés à leurs rejets dans l'atmosphère en particulier vis à vis de la préservation de la couche d'ozone.

On a maintenant trouvé qu'on pouvait utiliser le HFA161 (CH$_3$-CH$_2$F) comme agent de transfert et qu'on obtenait un PVDF de très bonne stabilité thermique tout en conservant la productivité du procédé.

### [Brève description de l'invention]

La présente invention concerne un procédé de fabrication de PVDF homopolymère ou copolymère par polymérisation radicalaire du fluorure de vinylidène (VDF), et éventuellement d'un comonomère, en dispersion aqueuse en présence :

- de HFA161 (CH$_3$-CH$_2$F) comme agent de transfert,
- d'un initiateur radicalaire,
- éventuellement d'un additif dispersant.

Selon une forme avantageuse l'invention est un procédé discontinu ou semi-continu de fabrication de PVDF homopolymère ou copolymère dans lequel :

- on charge le réacteur de polymérisation avec de l'eau, l'additif dispersant éventuel et éventuellement une paraffine,
- le réacteur est désaéré pour éliminer l'oxygène,
- le réacteur est porté à la température choisie et on charge le VDF et le monomère éventuel jusqu'à atteindre la pression voulue,
- l'agent de transfert (HFA161 ) est introduit dans le réacteur soit en totalité soit en partie au départ et en partie au cours de la polymérisation,

- on ajoute l'initiateur en totalité ou en partie pour démarrer la polymérisation et la baisse de pression qui en résulte est compensée par l'ajout de VDF et du comonomère éventuel,
- le reste éventuel de l'initiateur est ajouté au cours de la polymérisation,
- après introduction de la quantité prévue de VDF et de comonomère éventuel le réacteur est dégazé et on sépare par tout moyen le PVDF de l'eau et des restes éventuels des réactifs engagés.

La température choisie est la température suffisante pour polymériser le VDF et est de l'ordre de 45 à 130°C. La pression voulue est de l'ordre de 40 à 120 bars.

Le volume d'eau dans lequel on réalise la dispersion des monomères, les quantités d'additif dispersant, d'initiateur et d'agent de transfert sont déterminables facilement par l'homme de métier. On effectue la polymérisation dans un réacteur agité puis on sépare par tout moyen le PVDF (il est sous forme de particules solides ) et l'eau. Ces techniques sont connues en elles mêmes et sont décrites dans les brevets US 4025709, US 4569978, US 4360652, EP 626396 et EP 0655468.

Selon la nature de l'additif dispersant et ses proportions le procédé est dit "en émulsion", "en suspension" ou tous autres procédés dérivés de l'émulsion ou de la suspension (microsuspension, miniémulsion...), lesquels sont parfaitement connus par l'homme de l'art. Après la fin de la polymérisation on sépare le PVDF de l'eau et des restes éventuels des réactifs engagés.

Dans le cas des procédés type suspension, le PVDF se présente sous la forme d'une dispersion granulaire dont la taille moyenne des grains permet de réaliser directement une filtration et un lavage, par exemple par passage d'eau pure dans le système de filtration.

Dans le cas des procédés type émulsion, le polymère se présente sous la forme d'un latex composé de particules très fines, dont le diamètre moyen est généralement inférieur à 1 micron. Ce latex peut être coagulé et éventuellement concentré en éliminant une partie de l'eau par exemple par centrifugation. Dans l'état coagulé, il est également possible d'obtenir une crème aérée moins dense que l'eau qu'on peut laver avec de l'eau déionisée selon des techniques déjà décrites par l'art antérieur (brevets US 4,218,517 et EP 0 460 284). Puis on peut sécher la crème lavée en la mettant au contact d'un gaz chaud dans un atomiseur et on recueille le PVDF en poudre. Cette technique est connue et utilisée dans les procédés de fabrication du PVDF.

[Description détaillée de l'invention]

**S'agissant du comonomère fluoré éventuel** il est avantageusement choisi parmi les composés contenant un groupe vinyle capable de s'ouvrir par l'action de radicaux libres pour se polymériser et qui contient, directement attaché à ce groupe vinyle, au moins un atome de fluor, un groupe fluoroalkyle ou un groupe fluoroalkoxy. A titre d'exemple de comonomère on peut citer le fluorure de vinyle; le trifluoroethylene (TRFE); le chlorotrifluoroethylene (CTFE); le 1,2-difluoroethylene; le tetrafluoroethylene (TFE); l'hexafluoropropylene (HFP); les perfluoro(alkyl vinyl) ethers tels que le perfluoro(methyl vinyl)ether (PMVE), le perfluoro(ethyl vinyl) ether (PEVE) et le perfluoro(propyl vinyl) ether (PPVE); le perfluoro( 1,3 -dioxole); le perfluoro(2,2-dimethyl- 1,3 -dioxole) (PDD); le produit de formule $CF_2=CFOCF_2CF(CF_3)OCF_2CF_2X$ dans laquelle X est $SO_2F$, $CO_2H$, $CH_2OH$, $CH_2OCN$ ou $CH_2OPO_3H$; le produit de formule $CF_2=CFOCF_2CF_2SO_2F$; le produit de formule $F(CF_2)nCH_2OCF=CF_2$ dans laquelle n est 1, 2, 3, 4 or 5; le produit de formule $R_1CH_2OCF=CF_2$ dans laquelle $R_1$ est l'hydrogene ou $F(CF_2)z$ et z vaut 1, 2, 3 ou 4; le produit de formule $R_3OCF=CH_2$ dans laquelle $R_3$ est $F(CF_2)z$- et z est 1, 2, 3 or 4; le perfluorobutyl ethylene (PFBE); le 3,3,3-trifluoropropene et le 2-trifluoromethyl-3 ,3 ,3 -trifluoro- 1 -propene. On peut utiliser plusieurs comonomères. S'agissant du PVDF copolymère la proportion de VDF est d'au moins 60% en poids pour 40% de comonomère et de préférence d'au moins 85% en poids pour 15% de comonomère. Le comonomère est avantageusement choisi parmi l'HFP, le CTFE, le TFE et le TRFE.

**S'agissant de l'additif dispersant** on désigne ainsi tout produit capable de disperser les monomères dans l'eau afin de faciliter leur polymérisation. Il peut s'agir d'un tensioactif, d'une composition émulsifiante ou d'un colloïde. Dans les procédés en émulsion on utilise avantageusement un tensioactif ionique dérivé d'un acide ou une d'une base organique.

**S'agissant du tensioactif** les brevets US 4025709, US 4569978, US 4360652, EP 626396 et EP 0655468 décrivent les procédés de synthèse du PVDF par mise en émulsion aqueuse du $VF_2$ et sa polymérisation, on y trouve de nombreuses formules de tensioactifs.

A titre d'exemple on peut citer ceux de formule générale : $ZC_nF_{2n}COOM$ dans laquelle Z est un atome de fluor ou de chlore, n est un nombre entier valant 6 à 13 et M est un atome d'hydrogène ou de métal alcalin ou un groupe ammonium ou un groupe ammonium comportant au moins un substituant alkyle inférieur.

On peut encore citer les perfluoroalkanoates de lithium de formule $F_3C(CF_2)_{n-2}CO_2Li$ où n = 7, 8, 9 et 10.

La quantité totale de tensioactif introduite, au départ ou en cours de polymérisation, peut être comprise entre 0.05 et 0,5 % en poids de la charge totale de momomères fluorés mis en oeuvre.

**Avantageusement on ajoute aussi, en plus du tensioactif, une paraffine.** La paraffine mise en oeuvre a un point de fusion allant de 40 à 70°C et représente de 0,005 à 0,1 % en poids par rapport au poids total des monomères fluorés.

**S'agissant du colloide** il peut être choisis parmi les agents de mise en suspension usuels, tels que les alcools polyvinyliques et les dérivés cellulosiques hydrosolubles, tels que les alkylcelluloses ou les alkylhydroxyalkylcelluloses.

**S'agissant de l'amorceur** on désigne ainsi tout générateur de radicaux capable de provoquer la polymérisation des monomères fluorés dans le procédé décrit plus haut. De préférence l'amorceur (ou initiateur radicalaire) mis en oeuvre représente de 0.10 à 2 % en poids par rapport au poids total du ou des monomères fluorés mis en oeuvre.

**Avantageusement** c'est un initiateur organosoluble. On peut citer essentiellement les peroxydes hydrocarbonés, tel que le di-tertiobutylperoxyde, le di-cumylperoxyde ou le peroxyde de benzoyle, les peroxydicarbonates de dialkyle, tel que le diethyl ou di-iso-propylperoxydicarbonate ou di-n-propylperoxydicarbonate, les peracides ou peresters, tel que le perpivalate de t-butyle ; le perpivalate de t-amyle ou le peroxybenzoate de t-butyle.

**S'agissant de l'agent de transfert** et donc le HFA161 ($CH_3$-$CH_2$F) il est utilisé au taux pondéral de 0.05 à 5% par rapport à la charge totale de monomères fluorés mis en oeuvre pour la polymérisation. Le choix de l'agent de transfert dans un procédé de polymérisation radicalaire doit répondre principalement à 2 critères :

1) Permettre de faire un polymère de bonne stabilité thermique. La stabilité thermique du polymère peut être affectée soit par des produits de décomposition indésirables soit par des extrémités de chaînes instables sous l'effet d'un traitement thermique.
2) Être efficace à des teneurs faibles.

D'une manière générale ces deux critères sont appréciés de la façon suivante:

**Stabilité thermique:** A partir de poudre on fabrique une plaqué en moulage par compression. Cette plaque de 4 mm d'épaisseur est ensuite chauffée à 265°C pendant 1h dans un four de marque Metrastat® PSD 260. La couleur de la plaque est caractérisée par un indice de jaune correspondant à la norme ASTM 1925. Elle est déterminée à l'aide d'un colorimètre de marque Minolta® CR 200. Le produit est d'autant plus jaune que l'indice de jaune YI est élevé.

**Efficacité de l'agent de transfert :** L'efficacité est reliée à la quantité d'agent de transfert nécessaire pour faire 1 kg de polymère de masses moléculaires déterminées. Les masses moléculaires sont déterminées à la fois par la technique GPC (abréviation de Gel Permeation Chromatography) aussi appelée SEC (Steric Exclusion Chromatography) et par la mesure d'un indice de fluidité à l'état fondu ou MFI (abréviation de Melt Flow Index). La GPC est réalisée dans la diméthylformamide à 70°C. La masse moléculaire moyenne en poids $\overline{Mw}$ est exprimée en équivalent polystyrène. Le MFI est mesuré à 230°C sous une charge de 5kg selon la norme ISO 1133 et il est exprimé en g/10 min. Pour exprimer l'efficacité en tant qu'agent de transfert par une valeur comparable nous avons déterminé une constante de transfert apparente alpha à partir de la masse moyenne $\overline{Mw}$ et le rapport (charge pondérale d'agent de transfert)/ (charge pondérale totale de VDF et comonomère éventuel) désigné par (CTA)/(VDF).

$$\frac{1}{\overline{Mw}} = 1.9310^{-6} + \text{alpha (CTA)/(VDF)}$$

La constante alpha est d'autant plus grande que l'agent de transfert est plus efficace.

**On décrit maintenant plus en détail le procédé de l'invention en opérant en émulsion.** D'une manière générale le procédé suivant l'invention peut être conduit de la manière suivante.

**Avantageusement** on prépare une dispersion aqueuse de l'amorceur stabilisé par un tensioactif pouvant être celui utilisé pour conduire la polymérisation. Pour réaliser cette dispersion, on mélange l'eau, l'amorceur et du tensioactif dans un disperseur. C'est cette dispersion qui est ajoutée au début puis éventuellement au cours de la polymérisation.

a) Polymérisation: Après chargement du réacteur de polymérisation avec de l'eau, du tensioactif, éventuellement de la paraffine, on ajoute l'agent de transfert, on pressurise le réacteur, après avoir éliminé l'oxygène, en y ajoutant du fluorure de vinylidène seul ou en mélange avec le comonomère et on porte à la température choisie. Avantageusement, l'émulsion aqueuse est polymérisée à une température de 45 à 130°C. De préférence, la polymérisation est réalisée à une pression absolue de 40 à 120 bars. Le démarrage de la réaction est obtenu par addition de la dispersion d'amorceur .

Pendant la polymérisation on rajoute éventuellement le VDF seul ou en mélange avec un comonomère pour maintenir la pression ou pour obtenir une variation de pression controlée. On procède éventuellement à l'addition de l'amorceur par incréments ou en continu. Après introduction de la quantité prévue de monomère(s) fluoré(s), le réacteur est dégazé et le latex vidangé.

b) finition:

- Lavage : Le latex est dilué puis introduit dans un coagulateur ou il est soumis à un cisaillement en présence d'air. Sous l'effet cumulé de ces deux actions, le latex se transforme en crème aérée d'une densité inférieure à celle de l'eau.

    Cette crème est éventuellement lavée à contre-courant avec de l'eau déionisée par exemple selon le procédé décrit dans les brevets US 4,128,517 et EP 0 460 284. Le lavage à l'eau permet de debarasser le latex du tensio actif qui était nécessaire pour la polymérisation.

- Séchage : A la sortie de la colonne de lavage ou immédiatement après la coagulation la crème aérée est envoyée dans un récipient de stockage avant d'être dirigée par pompage dans un atomiseur qui la transforme en une poudre sèche.

Cette étape de séchage dans un atomiseur peut également être appliquée au latex initial, éventuellement dilué, au latex coagulé par exemple par cisaillement mécanique avec ou sans dilution préalable ou encore à la crème aérée.

Les températures de l'air à l'entrée et à la sortie de l'atomiseur sont déterminées de manière à obtenir un maximum d'efficacité en termes de productivité et d'amélioration de la coloration du PVDF. En général, la température de l'air à l'entrée sera comprise entre 130 et 200°C, et celle de l'air à la sortie entre 70 et 120°C. Avantageusement, ces deux températures seront comprises respectivement entre 140 et 180°C, et 80 et 100°C. On obtient une poudre de densité apparente 0,3 à 0,4 avec une granulométrie comprise entre 1 et 20 $\mu$m.

**[Exemples]**

**Exemple 1**

a) Préparation d'une émulsion d'initiateur. Un mélange de 1620g d'eau déionisée, de 33g de peroxydicarbonate de n-propyle (nPP) et de 3,4g de perfluorononanoate d'ammonium est agité à l'aide d'une turbine. L'émulsion est conservée à 0°C avant d'être introduite dans le réacteur.

b) Polymérisation. Dans un réacteur muni d'une agitation, d'une double enveloppe et d'un système de régulation de température intérieure on introduit :

   18.4 kg d'eau déionisée,
   64,4g d'une solution à 15% en poids de perfluorooctanoate d'ammonium,
   1,4g de paraffine ayant un point de fusion de 60°C.

Le réacteur est désaéré à l'aide d'une pompe à vide et chauffé à 83°C sous agitation. Après ajout de 21g de HFA-161 dans le réacteur le VDF est introduit jusqu'à atteindre une pression de 45 bars. Pendant la polymérisation on introduit 1460g d'émulsion de nPP décrite au § a soit 29g de nPP. La pression est maintenue à 45 bars par un ajout de VDF. Après avoir introduit une charge totale de 8,6kg de VDF l'alimentation de VDF et d'émulsion de nPP est arrêtée. La pression diminue jusqu'à 10 bars, pression à laquelle le réacteur est dégazé. On récupère 27,8kg de latex. Après séchage le PVDF obtenu est de 8,05kg. La durée de polymérisation est de 3h 15.

c) Coagulation , lavage et séchage. La coagulation et le lavage sont effectués selon l'enseignement du brevet US 4128517. Le latex est dilué de manière à avoir un taux de solide de 12%, puis introduit dans un coagulateur de 12 litres à un débit de 18l/h. On introduit simultanément de l'air avec un débit de 15 l/h. Le latex est coagulé par le cisaillement produit par la turbine (vitesse de bout de pale 12 m/s) et transformé en crème de densité inférieure à celle de l'eau. Cette crème est introduite dans une colonne de lavage de 14 litres alimentée en tête par un débit de 140 l/h. La bouillie de latex coagulé et lavé sortant de la colonne de lavage est introduite dans un récipient intermédiaire à partir duquel elle est envoyée dans un atomiseur de 1 m$^3$. La température de l'air à est de 85°c à l'entrée et de 140°C à la sortie de l'atomiseur..

Sur la poudre obtenue après séchage par atomisation on effectue les tests suivants :

Indice de fluidité (MFI) selon la norme ISO 1153 à 230°C sous 5 kg,

Masse moleculaire moyenne $\overline{Mw}$ par GPC, solvant : diméthylformamide T=70°C, résultat en équivalent polysty-rène,

Indice de jaune YI sur une plaque moulée de 4 mm d'épaisseur chauffée pendant 1 h à 265°C dans un four de marque Metrastat® PSD 260.

**Exemples comparatifs a-d**

Dans les exemples comparatifs a-d l'agent de transfert utilisé est respectivement :

| le trichlorofluorométhane $CCl_3F$ (CFC11 ) | ex a |
|---|---|
| le HFA-152a $CH_3$-$CF_2H$ | ex b |
| l'acétate d'éthyle | ex c |
| le carbonate de diéthyle | ex d |

La polymérisation est faite de façon similaire à l'exemple 1. La charge totale de VDF, la quantité de PVDF formé et la durée de polymérisation sont résumés dans le tableau 1. Le tableau 2 compare les caractéristiques de stabilité thermique et d'efficacité liés à l'utilisation des différents agents de transfert.

Tableau 1

| exemple | agent de transfert | | | charge de VDF | charge nPP g | durée de polymérisation h | poids PVDF formé g |
|---|---|---|---|---|---|---|---|
| | nom | formule | quantité g | | | | |
| 1 | HFA 161 | $CH_3\text{-}CH_2F$ | 21 | 8500 | 29 | 3h 15 | 8050 |
| a | CFC 11 | $CFCl_3$ | 80 | 8500 | 28 | 2h 55 | 8000 |
| b | HFA 152a | $CH_3\text{-}CHF_2$ | 140 | 8500 | 28 | 3H 05 | 8000 |
| c | acétate d'éthyle | $C_2H_5OCO\ CH_3$ | 22 | 8500 | 28 | 2h 50 | 8010 |
| d | carbonate de diéthyle | $(C_2H_5\text{-}O)_2\text{-}CO$ | 20 | 8500 | 30 | 3H 03 | 8020 |

Tableau 2

| exemple | agent de transfert | stabilité thermique YI | $\overline{M_W}$ | MFI | efficacité alpha | réglementation environnement |
|---|---|---|---|---|---|---|
| 1 | HFA 161 | 29 | 354000 | 1,5 | $3{,}4\ 10^{-4}$ | permis |
| a | CFC 11 | 29 | 301000 | 4,6 | $1{,}4\ 10^{-4}$ | réglementé |
| b | HFA 152a | 30 | 350000 | 1,5 | $0{,}52\ 10^{-4}$ | permis |
| c | acétate d'éthyle | 40 | 310000 | 3,9 | $4{,}7\ 10^{-4}$ | permis |
| d | carbonate de diéthyle | 38 | 271000 | 8,2 | $7.0\ 10^{-4}$ | permis |

**Revendications**

1. Procédé de fabrication de PVDF homopolymère ou copolymère par polymérisation radicalaire du fluorure de vinylidène (VDF), et éventuellement d'un comonomère, en dispersion aqueuse en présence :

   • de HFA161 ($CH_3\text{-}CH_2F$) comme agent de transfert,

- d'un initiateur radicalaire,
- éventuellement d'un additif dispersant.

**2.** Procédé selon la revendication 1 dans lequel la proportion de VDF est d'au moins 60% en poids pour 40% de comonomère.

**3.** Procédé selon la revendication 2 dans lequel la proportion de VDF est d'au moins 85% en poids pour 15% de comonomère.

**4.** Procédé selon l'une quelconque des revendications précédentes dans lequel l'agent de transfert est utilisé au taux pondéral de 0.05 à 5% par rapport à la charge totale de monomères fluorés mis en oeuvre pour la polymérisation.

**5.** Procédé selon l'une quelconque des revendications précédentes dans lequel l'amorceur (ou initiateur radicalaire) mis en oeuvre représente de 0.1 à 2 % en poids par rapport au poids total du ou des monomères fluorés mis en oeuvre.

**6.** Procédé selon l'une quelconque des revendications précédentes dans lequel l'additif dispersant est un tensio actif et sa quantité totale introduite, au départ ou en cours de polymérisation, peut être comprise entre 0.05 et 0,5 % en poids de la charge totale de momomères fluorés mis en oeuvre.

**7.** Procédé discontinu ou semi-continu de fabrication de PVDF homopolymère ou copolymère selon l'une quelconque des revendications précédentes dans lequel :

- on charge le réacteur de polymérisation avec de l'eau, l'additif dispersant éventuel et éventuellement une paraffine,
- le réacteur est désaéré pour éliminer l'oxygène,
- le réacteur est porté à la température choisie et on charge le VDF et le monomère éventuel jusqu'à atteindre la pression voulue,
- l'agent de transfert (HFA161) est introduit dans le réacteur soit en totalité soit en partie au départ et en partie au cours de la polymérisation,
- on ajoute l'initiateur en totalité ou en partie pour démarrer la polymérisation et la baisse de pression qui en résulte est compensée par l'ajout de VDF et du comonomère éventuel,
- le reste éventuel de l'initiateur est ajouté au cours de la polymérisation,
- après introduction de la quantité prévue de VDF et de comonomère éventuel le réacteur est dégazé et on sépare par tout moyen le PVDF de l'eau et des restes éventuels des réactifs engagés.

Office européen
des brevets

**RAPPORT DE RECHERCHE EUROPEENNE**

Numéro de la demande

EP 04 29 0158

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 617 058 A (AUSIMONT SPA) 28 septembre 1994 (1994-09-28) * page 2, ligne 42 - page 2, ligne 44 * ----- | 1 | C08F2/38 C08F14/18 |

| | | | DOMAINES TECHNIQUES RECHERCHES (Int.Cl.7) |
|---|---|---|---|
| | | | C08F |

Le présent rapport a été établi pour toutes les revendications

| Lieu de la recherche | Date d'achèvement de la recherche | Examinateur |
|---|---|---|
| La Haye | 30 mars 2004 | Cauwenberg, C |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
..................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**          EP 04 29 0158

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-03-2004

| Document brevet cité au rapport de recherche | | Date de publication | Membre(s) de la famille de brevet(s) | | Date de publication |
|---|---|---|---|---|---|
| EP 0617058 | A | 28-09-1994 | IT | MI930551 A1 | 23-09-1994 |
| | | | AT | 158310 T | 15-10-1997 |
| | | | CA | 2119411 A1 | 24-09-1994 |
| | | | DE | 69405618 D1 | 23-10-1997 |
| | | | DE | 69405618 T2 | 23-04-1998 |
| | | | EP | 0617058 A1 | 28-09-1994 |
| | | | ES | 2108313 T3 | 16-12-1997 |
| | | | JP | 3383064 B2 | 04-03-2003 |
| | | | JP | 7090008 A | 04-04-1995 |
| | | | US | 5516863 A | 14-05-1996 |

EPO FORM P0460

Pour tout renseignement concernant cette annexe : voir Journal Officiel de l'Office européen des brevets, No.12/82